# EUROPÄISCHE PATENTSCHRIFT

(11) **EP 0 821 841 B1**
(45) Veröffentlichungstag und Bekanntmachung des Hinweises auf die Patenterteilung: **28.10.1998**
(21) Anmeldenummer: 96909054.7
(22) Anmeldetag: 16.04.1996
(51) Int. Cl.: H02B 1/20, H02B 1/34, H05K 1/14

(54) **ANORDNUNG ZUM ANSCHLUSS VON VERSORGUNGSLEITUNGEN AN EIN ELEKTRONISCHES GERÄT SOWIE SCHRANK MIT EINER DERARTIGEN ANORDNUNG**
ARRANGEMENT FOR CONNECTING POWER SUPPLY LINES TO AN ELECTRONIC DEVICE AND CUBICLE WITH SUCH AN ARRANGEMENT
SYSTEME DE RACCORDEMENT DE LIGNES D'ALIMENTATION A UN APPAREIL ELECTRONIQUE ET ARMOIRE EQUIPEE D'UN TEL SYSTEME

(30) Priorität: 19.04.1995 DE 29506628 U
(43) Veröffentlichungstag der Anmeldung: 04.02.1998
(73) Patentinhaber: SIEMENS AKTIENGESELLSCHAFT, 80333 München (DE)
(72) Erfinder: ROSTER, Thomas, D-76275 Ettlingen (DE); SCHMITT, Reinhard, D-76829 Landau (DE)
(86) Internationale Anmeldenummer: DE9600661
(87) Internationale Veröffentlichungsnummer: WO9633540

(56) Entgegenhaltungen:
- DE-A- 4 303 793
- DE-U- 7 927 044
- DE-U- 9 311 526
- US-A- 3 327 176
- US-A- 5 272 592
- US-A- 5 274 528
- US-A- 5 351 165

## Beschreibung

Die Erfindung betrifft eine Anordnung zum Anschluß von Versorgungsleitungen an ein elektronisches Gerät nach dem Oberbegriff des Anspruchs 1. Eine Anordnung dieser Art ist aus US-A-5 274 528 bekannt. Ein Schrank nach dem Oberbegriff des Anspruchs 9 ist

aus dem DE-GM 93 11 526 bekannt. Dort ist ein Schrankgestell eines Automatisierungssystems beschrieben, welches aus Längs- und Querholmen besteht. In das Gestell sind Baugruppenträger eingebaut, die mit Baugruppen, z. B. digitalen Ein- und Ausgabebaugruppen, bestückt sind. Stromschienen verlaufen vertikal am rechten Längsholm und sind an einer Leiterplatte angeschlossen, die vertikal im unteren Bereich des Längsträgers angeordnet und mit Einspeisedioden zur Trennung der Versorgungsspannungen bei redundanter Einspeisung versehen ist. Diese Leiterplatte ist über flexible Leitungen mit einer Klemmanordnung verbunden, die aus horizontal nebeneinander angeordneten, auf einem Standardprofil befestigten Reihenklemmen besteht. Nachteilig dabei sind der voluminöse Aufbau der relativ teuren, handelsüblichen Klemmen und die relativ hohe Verlustleistung durch die Klemmverbindungen an den flexiblen Leitern und durch den elektrischen Widerstand der Leiter selbst, der nur durch entsprechend große Auslegung der Querschnitte der flexiblen Leiter verringert werden kann. Ebenso müssen bei der bekannten Einrichtung zur Parallelversorgung weiterer elektronischer Geräte zusätzliche Klemmen installiert werden.

Der Erfindung liegt die Aufgabe zugrunde, eine Anordnung zum Anschluß von Versorgungsleitungen an ein elektronisches Gerät sowie einen Schrank mit einer derartigen Anordnung zu schaffen, die bei geringerem Raumbedarf einen verlustärmeren Anschluß der Versorgungsleitungen ermöglicht.

Zur Lösung dieser Aufgabe weist die neue Anordnung der eingangs genannten Art die im kennzeichnenden Teil des Anspruchs 1 genannten Merkmale bzw. der neue Schrank die im Anspruch 8 genannte Merkmale auf. In den Unteransprüchen 2 bis 7 sind vorteilhafte Weiterbildungen der Anordnung beschrieben.

Die Erfindung hat den Vorteil, daß auf engstem Raum ein Hochstromanschluß, beispielsweise für eine 24 Volt-Gleichspannungsversorgung, für Leitungsquerschnitte von 16 mm² bis 95 mm² für ein elektronisches Gerät realisiert wird. Die Erfindung ermöglicht weiterhin in vorteilhafter Weise einen redundanten Stromversorgungsanschluß mit zwei Versorgungsspannungs- und zwei Masseleitern, eine redundante Anschlußmöglichkeit zur Parallelversorgung eines Erweiterungsgerätes, eine sehr verlustarme Anbindung an das geräteinterne Stromverteilungssystem, eine EMV-gerechte Integration eines Eingangsfilters für Flächen- oder Sternpunkterdung, eine visuelle Überprüfung der Kontaktstellen der Einspeisung, ein gefahrloses Überprüfen und Nachziehen der Kontaktstellen unter Last, gefahrloses Abklemmen des Verbrauchers unter Last, ohne parallel versorgte Geräte zu beeinflussen, gefahrloses Abklemmen der redundanten Versorgungspotentiale unter Last zur vereinfachten Fehlerdiagnose, ohne parallel versorgte Geräte zu beeinflussen, und eine kreuzungsfreie Verlegung der Einspeiseleitungen direkt im Anschlußbereich des elektronischen Geräts. Dagegen mußte bisher die EMV-gerechte Integration von Eingangsfiltern mit zusätzlichen großflächigen Verbindungselementen ausgeführt werden. Dabei war die vorteilhafte Anordnung des Filters direkt an den Klemmen nicht möglich. Das Abklemmen eines elektronischen Geräts konnte bisher aus sicherheitstechnischen Gründen nur bei abgeschalteter Hauptsicherung erfolgen. Dies hatte zur Folge, daß alle parallel versorgten Geräte abgeschaltet werden mußten. Ebenso war eine On-line-Diagnose eines elektronischen Gerätes mit

zentraler Einspeisung nicht möglich. Diese Nachteile werden durch die Erfindung vermieden.

Anhand der Zeichnungen, in denen ein Ausführungsbeispiel der Erfindung dargestellt ist, werden im folgenden die Erfindung sowie Ausgestaltungen und Vorteile näher erläutert.

Es zeigen:
- Figur 1: eine Prinzipdarstellung einer erfindungsgemäßen Anordnung,
- Figur 2: eine Frontansicht einer Anordnung mit einer Abdeckung,
- Figur 3: eine Frontansicht mit abgehobener Abdeckung,
- Figur 4: eine Rückansicht einer erfindungsgemäßen Anordnung und
- Figur 5: ein Ausführungsbeispiel einer Anschlußklemme.

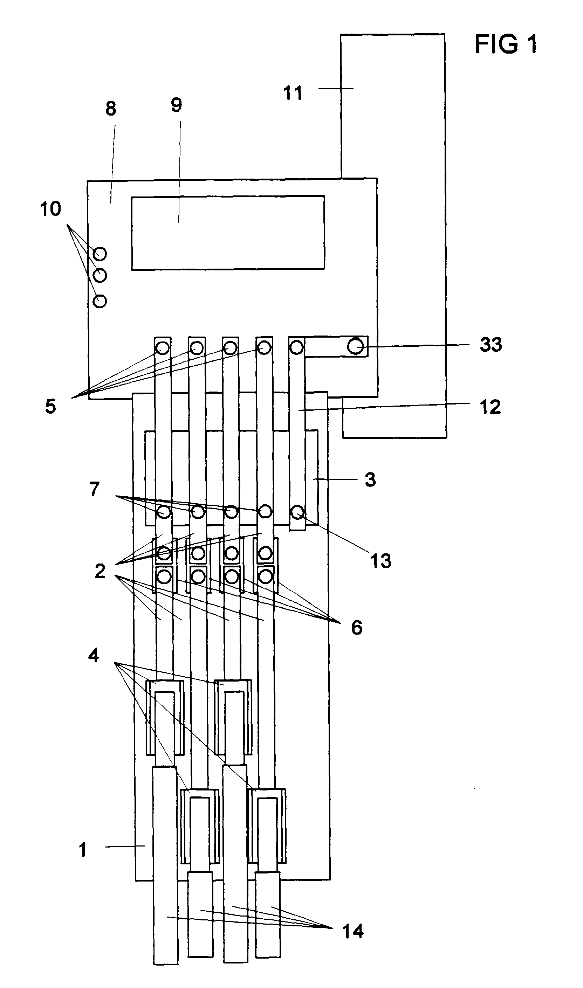

In einen Kunststoffkörper 1 werden gemäß Figur 1 vier starre elektrische Leiter 2 nebeneinander eingelegt. Jeweils ein Ende der starren elektrischen Leiter 2 ist als Anschlußklemme 4 für Versorgungsleitungen 14 eines elektronischen Geräts ausgebildet. Die Anschlußklemmen 4 sind versetzt nebeneinander angeordnet und wie die elektrischen Leiter 2 durch den Kunststoffkörper 1 elektrisch voneinander isoliert. Durch diese versetzte Anordnung sind die Anschlußklemmen 4 in einer Anschlußeinheit auf engstem Raum unterzubringen. Die starren elektrischen Leiter 2 bestehen jeweils aus zwei Teilen, die mit einem Kurzschlußbügel 6 elektrisch verbunden sind. Die Anschlußklemmen 4 können somit bei eingelegter Versorgungsleitung 14 zusammen mit einem ersten Teil eines elektrischen Leiters 2 ausgebaut werden. Wenn über eine Anschlußklemme 4 auch eine Versorgungsleitung 14 zu einem Erweiterungsgerät geschleift wird, ist es somit möglich, ein Hauptgerät von der Anschlußklemme 4 zu trennen, ohne daß das Erweiterungsgerät dabei abgeschaltet werden muß. Ein zweiter Teil der starren elektrischen Leiter 2 ist mit Kontaktstellen 5 auf einer Leiterplatte 8 elektrisch verbunden. Der Kunststoffkörper 1 trägt auch ein Einspeisefilter 3, das über Schraubverbindungen 7 großflächig direkt an den starren elektrischen Leitern 2 angeschlossen ist. Das Einspeisefilter 3 ist somit in unmittelbarer Nähe der Einspeisepunkte an den Anschlußklemmen 4 angeordnet. Die Leiterplatte 8 ist sowohl mechanischer Träger des Kunststoffkörpers 1 und von Einspeisedioden 9 als auch elektrischer Verteiler der Potentiale zu den Einspeisedioden 9 und zu Anschlußstellen 10, über welche die Versorgungsspannungen an geräteinterne Verbraucher weitergeleitet werden. Die Einspeisedioden 9 dienen zur Entkopplung der Netzteile bei redundanter Stromversorgung. Die Leiterplatte 8 ist mit dem Potential der Elektronikabschirmung auf einem elektrischen Leiter 11 großflächig elektrisch und über einen Befestigungspunkt 33 auch mechanisch verbunden. Das Abschirmungspotential wird von dem elektrischen Leiter 11 zunächst über die Leiterplatte 8 und dann über eine Stromschiene 12 zum Anschlußbereich des Einspeisefilters 3 geführt. Am Ende der Stromschiene 12 wird ein Anschlußpunkt 13 für das Abschirmungspotential gebildet, der den wahlweisen Einsatz eines Einspeisefilters 3 für Flächenerdung oder für Sternpunkterdung gestattet.

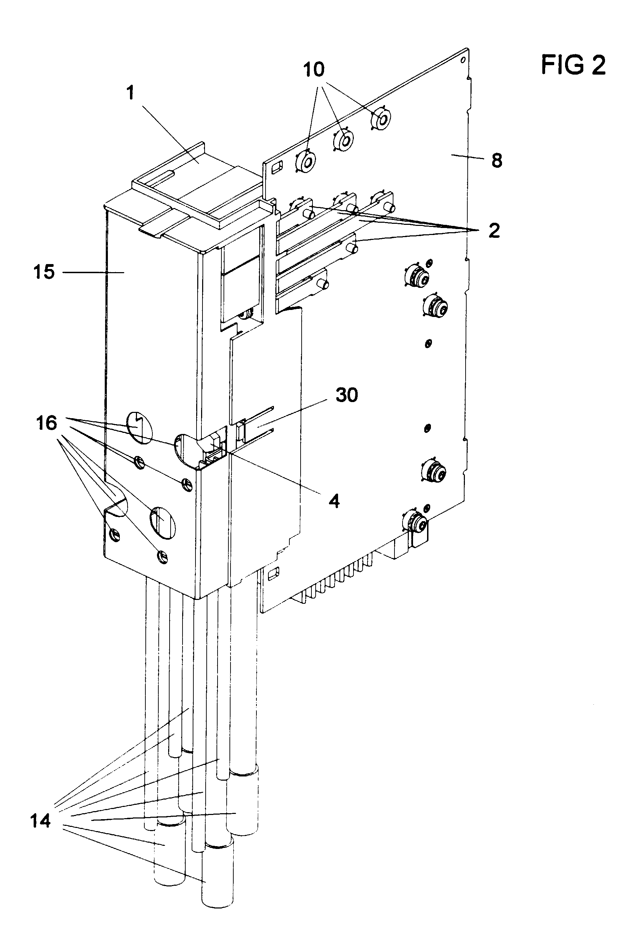

In der Perspektivansicht einer erfindungsgemäßen Anordnung zum Anschluß von Versorgungsleitungen nach Figur 2 sind gleiche Teile mit gleichen Bezugszeichen versehen. Die Anordnung wird durch eine Abdeckung 15 gegen unbeabsichtigtes Berühren der elektrischen Leiter geschützt. Die Abdeckung 15 besitzt im Bereich der Anschlußklemmen 4 Durchbrüche 16, die zur Überprüfung des Sitzes der Anschlußklemmen 4 unter Last einen gefahrlosen Zugang für ein geeignetes Werkzeug freigeben. Die Abdeckung 15 besteht aus durchsichtigem Material, so daß eine optische Kontrolle der Anschlußklemmen 4 problemlos möglich ist. Die Anschlußklemmen 4 werden durch Rasthaken 30 in ihrer Lage fixiert.

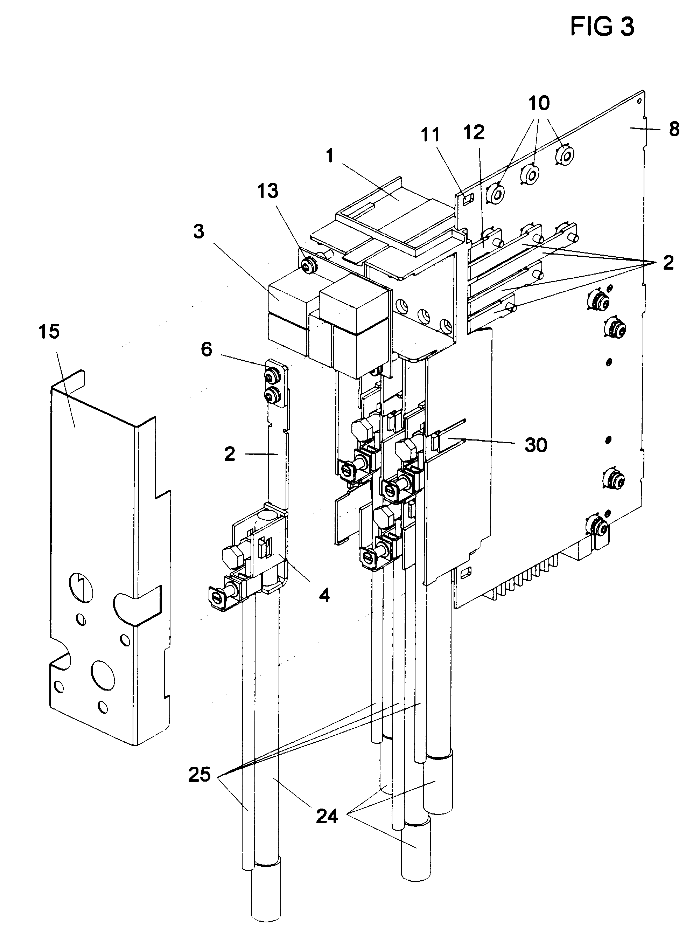

In der Darstellung nach Figur 3 mit abgehobener Abdeckung 15, entferntem Einspeisefilter 3 und einem ausgebauten ersten Teil eines starren elektrischen Leiters 2 ist gut die Lage der starren elektrischen Leiter in Nuten des Kunststoffkörpers 1 zu erkennen. Wiederum sind gleiche Teile mit gleichen Bezugszeichen versehen. In die Anschlußklemmen 4 sind jeweils zwei Versorgungsleitungen 24 und 25 eingelegt. Eine Versorgungsleitung 24 ist der Hauptversorgungsanschluß des ersten Gerätes als Hauptgerät. Dazu ist die Anschlußklemme 4 für Leitungen mit einem Querschnitt von 16 mm² bis maximal 95 mm² ausgelegt. Erweiterungsgeräte werden parallel mit einer Versorgungsleitung 25 angeschlossen und somit ebenfalls über die Leitung 24 mit Energie versorgt. Die Anschlußklemme 4 ist für einen Parallelanschluß mit einer Versorgungsleitung 25 mit einem Querschnitt von 2,5 mm² bis 50 mm² ausgelegt. Es ist ersichtlich, daß der erste Teil des starren elektrischen Leiters 2 mit der Anschlußklemme 4 bei angeschlossenen Versorgungsleitungen 24 und 25 ausgebaut werden kann. Ebenso kann jede der Versorgungsleitungen 24 oder 25 unabhängig voneinander in eine Anschlußklemme 4 eingelegt werden. Somit sind bei der erfindungsgemäßen Anschlußanordnung sowohl Haupt- als auch Erweiterungsgeräte bezüglich des Versorgungsspannungsanschlusses unabhängig voneinander betreibbar. Zur Parallelversorgung eines Erweiterungsgerätes sind in vorteilhafter Weise keine zusätzlichen aufwendigen Anschlußklemmen erforderlich. In Figur 3 wird auch die besonders kompakte Bauart einer erfindungsgemäßen Anschlußeinheit deutlich.

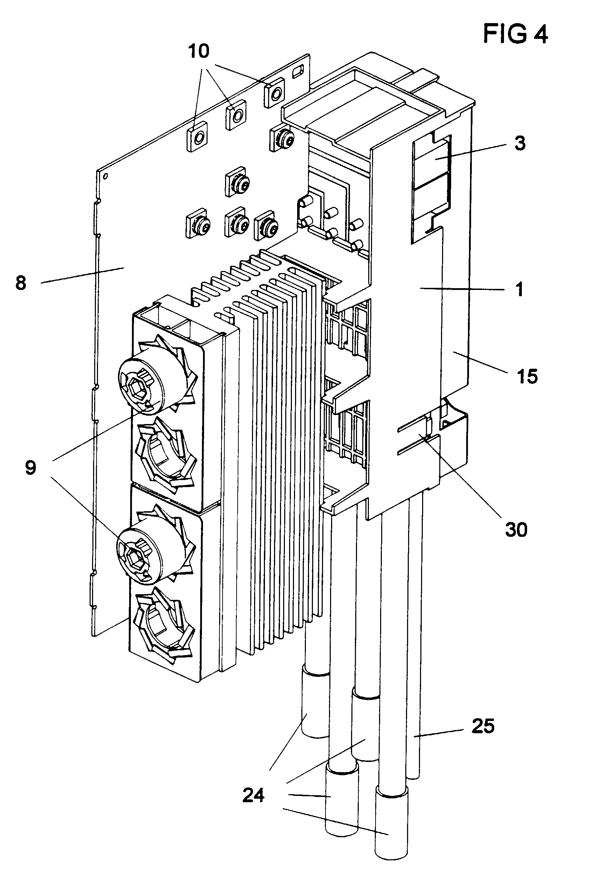

In der Rückansicht einer erfindungsgemäßen Anschlußanordnung nach Figur 4 sind besonders gut die Einspeisedioden 9 zur Entkopplung der Netzteile bei redundanter Stromversorgung sichtbar. In der Diodeneinheit sind zwei Einspeisedioden 9 bestückt, zwei weitere können erforderlichenfalls eingebaut werden. Kunststoffkörper 1 und Diodeneinheit werden durch die Leiterplatte 8 getragen, die auch für die Verteilung der Potentiale sorgt.

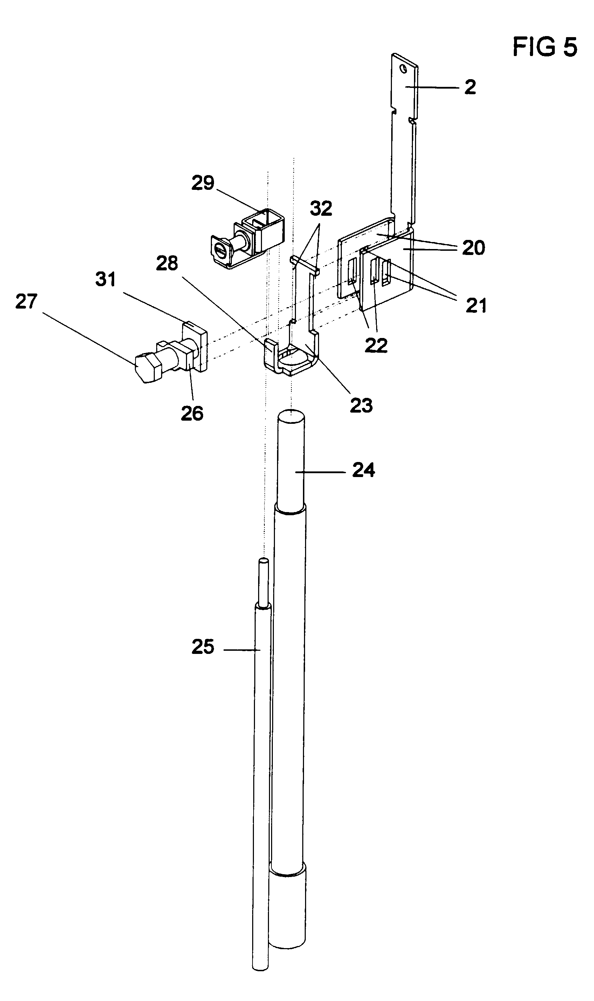

Gemäß Figur 5 weist der erste Teil eines starren elektrischen Leiters 2, dessen Ende als Anschlußklemme 4 ausgebildet ist, an diesem Ende zwei seitliche Laschen auf, die so gebogen sind, daß sie zwei parallele Schenkel 20 einer U-förmigen Nut bilden. In den Schenkeln 20 des U-förmigen Endes des starren elektrischen Leiters 2 befinden sich jeweils Rechteckausbrüche 21 und 22. Beim Einlegen des starren elektrischen Leiters 2 in den Kunststoffkörper 1 schnappen die Rasthaken 30 des Kunststoffkörpers 1 in die Rechteckausbrüche 21 und garantieren einen festen Sitz des Leiters 2 im Kunststoffkörper 1 (siehe auch Figur 3). Wenn nur die Versorgungsleitung 24 anzuschließen ist, d. h., wenn kein Erweiterungsgerät über die Versorgungsleitung 25 zusätzlich mit Energie zu versorgen ist, so kann auf die Verwendung eines Kontaktbügels 23 und einer Klemmschraube 29, die für die Versorgungsleitung 25 erforderlich wären, verzichtet werden. Die abisolierte Versorgungsleitung 24 wird dann in die U-förmige Nut zwischen den Schenkeln 20 eingelegt. Eine Druckplatte 31 und ein Gegenlager 26 mit einer Klemmschraube 27 werden parallel zu den Schenkeln 20 ausgerichtet und zwischen diesen positioniert. Durch Drehen der Klemmschraube 27 werden Anschlagkanten des Gegenlagers 26 zu den Schenkeln 20 hin bewegt. Hat das Gegenlager 26 die Position der Rechteckausbrüche 22 in den Schenkeln 20 erreicht, so dreht sich das Gegenlager 26 aufgrund der Gewindereibung weiter und schwenkt in die Rechteckausbrüche 22 ein. Die Wandungen der Rechteckausbrüche 22 verhindern ein Weiterdrehen des Gegenlagers 26. Durch weiteres Anziehen der Klemmschraube 27 wird nun das abisolierte Ende der Versorgungsleitung 24 mit der Druckplatte 31 gegen den Boden der U-förmigen Nut gedrückt und eine sichere Kontaktierung hergestellt. Beim Parallelanschluß eines Erweiterungsgerätes mit einer Versorgungsleitung 25 muß der Kontaktbügel 23 eingesetzt werden. Er besitzt eine kreisförmige Öffnung, durch die das abisolierte Ende der Versorgungsleitung 24 eingelegt wird. Die Versorgungsleitung 24 und der Kontaktbügel 23 werden nun gemeinsam zwischen die Schenkel 20 der U-förmigen Nut gebracht. Durch seitliche Einschnitte 32 im Kontaktbügel 23 fixiert sich dieser lagerichtig an den Schenkeln 20. Mit der Klemmschraube 27 wird, wie oben beschrieben, die Versorgungsleitung 24, die nun mit dem Kontaktbügel 23 versehen ist, angeschlossen. Zum Anschluß der Versorgungsleitung 25 für ein Erweiterungsgerät wird eine Klemmschraube 29 über eine Kontaktzunge 28 geschoben, die Versorgungsleitung 25 in die Öffnung der Klemmschraube 29 eingelegt und die Klemmschraube 29 angezogen. Auf diese Weise wird mit einfachen Mitteln eine sichere Kontaktierung der Versorgungsleitungen 24 und 25 in der Anschlußeinheit erreicht.

## Patentansprüche

1. Anordnung zum Anschluß von Versorgungsleitungen (14, 24, 25) an ein elektronisches Gerät mit Anschlußklemmen (4), die jeweils das Ende eines starren elektrischen Leiters (2) bilden, wobei die starren elektrischen Leiter (2) in einer Aufnahmeeinrichtung (1) nebeneinander angeordnet und mit dieser zu einer Anschlußeinheit zusammengefaßt sind, **dadurch gekennzeichnet,** daß an die Anschlußklemmen (4) jeweils zwei Versorgungsleitungen (24, 25) unabhängig voneinander anschließbar sind und daß die starren elektrischen Leiter (2) jeweils teilbar und erste Teile der starren elektrischen Leiter (2) mit den Anschlußklemmen (4) einzeln aus der Anschlußeinheit entnehmbar sind.

2. Anordnung nach Anspruch 1, **dadurch gekennzeichnet,** daß die Anschlußklemmen (4) gegeneinander versetzt angeordnet sind.

3. Anordnung nach Anspruch 1 oder 2, **dadurch gekennzeichnet,** daß die Aufnahmeeinrichtung durch einen Kunststoffkörper (1) gebildet wird, der zur Aufnahme der starren elektrischen Leiter (2) Nuten aufweist, in denen diese durch Rastverbindungen gehalten werden.

4. Anordnung nach Anspruch 3, **dadurch gekennzeichnet,** daß auf den zweiten Teilen der starren elektrischen Leiter (2) ein Einspeisefilter (3) für die Versorgungsspannungen angebracht ist.

5. Anordnung nach einem der vorhergehenden Ansprüche, **dadurch gekennzeichnet,** daß die Anschlußeinheit mit einer Abdeckung (15) versehen ist.

6. Anordnung nach Anspruch 5, **dadurch gekennzeichnet,** daß die Anschlußklemmen (4) jeweils Klemmschrauben (27, 29) aufweisen und daß die Abdeckung (15) im Bereich der Anschlußklemmen (4) Durchbrüche (16) aufweist, durch welche die Klemmschrauben (27, 29) zugänglich sind.

7. Anordnung nach Anspruch 5 oder 6, dadurch gekennzeichnet, daß die Abdeckung (15) aus durchsichtigem Material besteht.

8. Schrank mit einem Gestell zur Aufnahme von Baugruppenträgern, das Längs- und Querholme aufweist, mit an einem Längsholm vertikal verlaufenden Stromschienen zur Verteilung der Versorgungsspannungen zu den Baugruppenträgern, wobei die Stromschienen an einer Leiterplatte (8) angeschlossen sind, die vertikal am unteren Bereich des Längsträgers angeordnet und mit Einspeisedioden (9) zur Trennung der Versorgungsspannungen bei redundanter Einspeisung versehen ist, und mit einer Anordnung nach einem der vorhergehenden Ansprüche, **dadurch gekennzeichnet,** daß
- die Leiterplatte (8) die Anordnung trägt und mit elektrischen Leitern versehen ist zur Herstellung der erforderlichen elektrischen Verbindungen zwischen den starren elektrischen Leitern (2), den Einspeisedioden (9) und Anschlußstellen (10) für die Stromschienen.

## Claims

1. An arrangement for connecting supply lines (14, 24, 25) to an electronic device with connection terminals (4) which in each case form the end of a rigid electric conductor (2), the rigid electric conductors (2) being arranged next to one another in an accommodating device (1) and combined therewith to form a terminal unit, characterised in that two supply lines (24, 25) can in each case be connected independently of one another to the connection terminals (4), and that the rigid electric conductors (2) can in each case be divided and first parts of the rigid electric conductors (2) with the connection terminals (4) can be individually removed from the terminal unit.

2. An arrangement according to Claim 1, characterised in that the connection terminals (4) are arranged offset relative to one another.

3. An arrangement according to Claim 1 or 2, characterised in that the accommodating device is formed by a plastics body (1) which, for the accommodation of the rigid electric conductors (2), comprises grooves in which said conductors are retained by locking connections.

4. An arrangement according to Claim 3, characterised in that a feed-in filter (3) for the supply voltages is arranged on the second parts of the rigid electric conductors (2).

5. An arrangement according to one of the preceding claims, characterised in that the terminal unit is provided with a cover (15).

6. An arrangement according to Claim 5, characterised in that the connection terminals (4) each comprise clamping screws (27, 29) and that in the region of the connection terminals (4) the cover (15) has openings (16) through which the clamping screws (27, 29) are accessible.

7. An arrangement according to Claim 5 or 6, characterised in that the cover (15) consists of transparent material.

8. A cabinet with a rack for the accommodation of subracks comprising longitudinal- and cross members, with busbars extending vertically along a longitudinal member for the distribution of the supply voltages to the subracks, the busbars being connected to a circuit board (8) which is arranged vertically in the lower region of the longitudinal member, and with feed-in diodes (9) for isolating the supply voltages in the case of redundant incoming supply, and with an arrangement according to one of the preceding claims, characterised in that the circuit board (8) bears the arrangement and is provided with electric conductors for establishing the required electric connections between the rigid electric conductors (2), the feed-in diodes (9) and connection points (10) for the busbars.

## Revendications

1. Système destiné au raccordement de lignes d'alimentation (14, 24, 25) à un appareil électronique, comprenant des bornes de raccordement (4) qui forment chacune l'extrémité d'un conducteur électrique (2) rigide, les conducteurs électriques (2) rigides étant disposés côte à côte dans un dispositif de réception (1) et étant regroupés avec celui-ci en une unité de raccordement, **caractérisé** en ce qu'à chacune des bornes de raccordement (4) peuvent être raccordées deux lignes d'alimentation (24, 25) indépendamment l'une de l'autre, et en ce que les conducteurs électriques (2) rigides peuvent chacun être divisés, et les premières parties des conducteurs électriques (2) rigides peuvent être retirées individuellement, avec les bornes de raccordement (4), de l'unité de raccordement.

2. Système selon la revendication 1, **caractérisé** en ce que les bornes de raccordement (4) sont disposées de manière décalée les unes par rapport aux autres.

3. Système selon la revendication 1 ou 2, **caractérisé** en ce que le dispositif de réception est formé par un corps (1) en matière plastique qui présente, en vue de recevoir les conducteurs électriques (2) rigides, des rainures dans lesquelles ces derniers sont maintenus par encliquetage.

4. Système selon la revendication 3, **caractérisé** en ce que sur les secondes parties des conducteurs électriques (2) rigides, est placé un filtre d'alimentation (3) pour les tensions d'alimentation.

5. Système selon l'une des revendications précédentes, **caractérisé** en ce que l'unité de raccordement est pourvue d'un élément de recouvrement (15).

6. Système selon la revendication 5, **caractérisé** en ce que les bornes de raccordement (4) comportent chacune des vis de serrage (27, 29) et en ce que l'élément de recouvrement (15) présente, dans la zone des bornes de raccordement (4), des évidements de passage (16) permettant d'accéder aux vis de serrage (27, 29).

7. Système selon la revendication 5 ou 6, **caractérisé** en ce que l'élément de recouvrement (15) est réalisé en un matériau transparent.

8. Armoire comprenant un châssis destiné à recevoir des supports de modules et présentant des branches longitudinales et des branches transversales, l'ensemble comprenant des barres omnibus s'étendant verticalement sur une branche longitudinale, pour la distribution des tensions d'alimentation vers les supports de modules, les barres omnibus étant raccordées à une plaque à circuits imprimés (8) qui est disposée verticalement dans la zone inférieure du support longitudinal et qui est pourvue de diodes d'alimentation (9) pour la séparation des tensions d'alimentation en cas d'alimentation redondante, l'armoire comprenant également un système selon l'une des revendications précédentes, **caractérisé** en ce que
- la plaque à circuits imprimés (8) porte ledit système et est pourvue de conducteurs électriques pour l'établissement des liaisons électriques nécessaires entre les conducteurs électriques (2) rigides, les diodes d'alimentation (9) et des points de raccordement (10) pour les barres omnibus.
